# EUROPEAN PATENT APPLICATION

(11) **EP 1 193 001 A2**
(43) Date of publication of application: **03.04.2002**
(21) Application number: 01122645.3
(22) Date of filing: 27.09.2001
(51) Int. Cl.: B09B 1/00

(54) **Device for collecting gases, particularly for controlling facilities for the permanent storage of municipal solid waste**

(30) Priority: 02.10.2000 IT TV000120
(71) Applicant: France Dechets S.A., 92758 Nanterre (FR)
(72) Inventor: Puglierin, Livio, 21030 Altivole (Treviso) (IT)
(74) Representative: Modiano, Guido, Dr.-Ing.

(57) **Abstract**

A gas collection device (1), particularly for controlling facilities for the permanent storage of municipal solid waste, constituted by a longitudinally elongated hollow body (2) that has, at its lower and/or central part, first openings (4) for conveying biogas. The upper part of the hollow body is closed and accessible for measurements.

## Description

The present invention relates to a device for collecting gases, particularly for controlling facilities for the permanent storage of municipal solid waste.

Landfills for municipal solid waste are currently used which are obtained by performing an excavation that is filled over time by successive accumulation of layers of such waste.

The stratified deposition of such waste produces, after a few months, the degradation of the organic substances that are present, producing biogas mainly constituted by methane.

This biogas can be collected by way of appropriate aspiration ducts, so that it can be sent to a disposal or utilization plant, which usually comprises at least one burner.

In most landfills of conventional type, biogas collection is performed during the passive management of the landfill, after it has been closed down and then covered with a layer of soil.

Such biogas collection is performed by producing a plurality of vertical shafts that usually end with an external stack; in each one of these shafts, the biogas is burned with the sole purpose of eliminating the possibility of explosions thereof and therefore without obtaining any advantage from the energy-yielding qualities of said gas.

In addition to constituting an enormous waste of fuel, this conventional type of landfill has a first drawback, which arises from the great danger linked to the poor collection of biogas that can be achieved by way of the vertical shafts.

It has in fact been demonstrated that the biogas generated deep down by the anaerobic degradation of municipal solid waste, compressed by the overlying mass of other waste, can migrate underground for hundreds of meters, following diffusion pathways that are privileged because of their high permeability.

This leads to highly dangerous situations, since the biogas can accumulate in cavities or enclosed spaces that are partially impermeable to gas, for example, for example cellars of buildings located close to the landfill; in the past, the evident danger of these situations has caused more than once explosion proximate to or inside civil buildings, with consequent danger for the safety of their occupants.

Furthermore, even if the biogas migrated underground does not accumulate in a closed space but is able to reach the surface, one still has the problem of having to obviate these dangerous gas leaks, which also cause unpleasant odors due to the presence of substances such as for example sulfur dioxide, mercaptans or volatile fatty acids, which are characteristic of anaerobic decompositions and are perceivable even at extremely low concentrations.

A variation of this conventional type of landfill has a biogas conveyance duct that connects the free ends of the vertical shafts.

A device for aspirating the collected biogas and for sending it to a disposal facility or to a plant for its utilization is associated with such conveyance duct.

These facilities usually comprise one or more burners suitable to convert the energy produced by the combustion of the biogas, for example by generating electric power or another form of energy.

As regards the danger entailed by biogas leaks, these conventional types of landfill substantially suffer the same problems noted above.

The negative pressure imposed by aspiration in fact cannot be high enough to prevent leaks of biogas from the external perimeter of the landfill, since an excessively high value can lead to the aspiration of an excessive amount of oxygen; when the percentage of oxygen approaches approximately 15% of the total, the biogas does not burn correctly but tends to explode, with the risk of causing damage to the facility and danger for any operators who might be present.

As a partial remedy to this situation, it is known to use, in the vicinity of the landfill, riser pipes, i.e., vertical shafts a few meters in depth that are suitable to facilitate the rise of the biogas to the surface.

These conventional types of device, provided during the creation of the landfill, only partially solve the described problems, since they act only at a certain depth and do not allow adequate understanding of the state of evolution of the storage facility.

Moreover, they worsen the problem of the diffusion of unpleasant odors proximate to the surface.

The aim of the present invention is to solve the noted technical problems, eliminating the drawbacks of the cited known art by providing a biogas collection device that allows to provide an effective control of the streams of biogas generated by the decomposition of municipal solid waste.

Within the scope of the above aim, an important object of the invention is to provide a device that allows to reduce the danger inherent to the uncontrolled migration of biogas, allowing optimization of the operation of the landfill.

Another important object is to provide a device that can be installed easily and quickly, both within the perimeter of the landfill and outside it.

Another object is to provide a device that can be removed easily, so that it can be reused in different locations.

Another object is to provide a device that allows operators to easily acquire information, said acquisition being possibly also obtainable automatically.

Another object is to provide a device that can be used, conveniently in an automatic manner, for management of the biogas aspiration system.

Another object is to provide a device that allows to check analytically and in a short time the effectiveness of solutions aimed at improving the conveyance of biogas streams proximate to the landfill and to reduce the leaks of the biogas toward inhabited areas.

Another object is to provide a device that is structurally simple and has low manufacturing costs.

This aim and these and other objects that will become better apparent hereinafter are achieved by a gas collection device, particularly for controlling facilities for the permanent storage of municipal solid waste, constituted by a longitudinally elongated hollow body, characterized in that it has, at its lower and/or central part, first openings for conveying biogas, the upper part of said hollow body being closed and accessible for measurements.

Further characteristics and advantages of the invention will become better apparent from the detailed description of a particular embodiment, illustrated only by way of non-limitative example in the accompanying drawings, wherein:

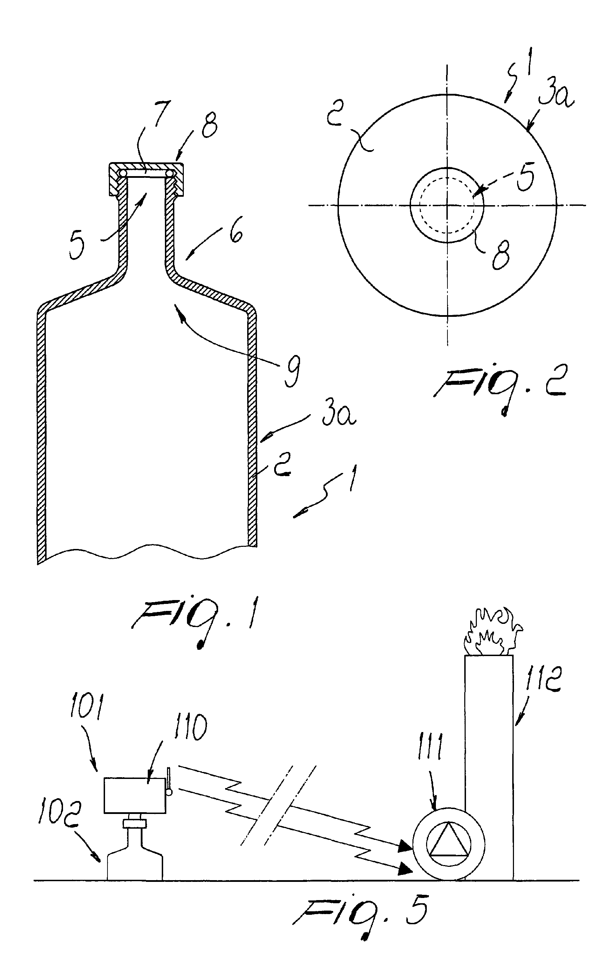

Figures 1 and 2 are respectively a sectional side view and a top view of the upper part of the device according to the invention;
Figure 3 is a side view of the device correctly arranged within a layer of soil;

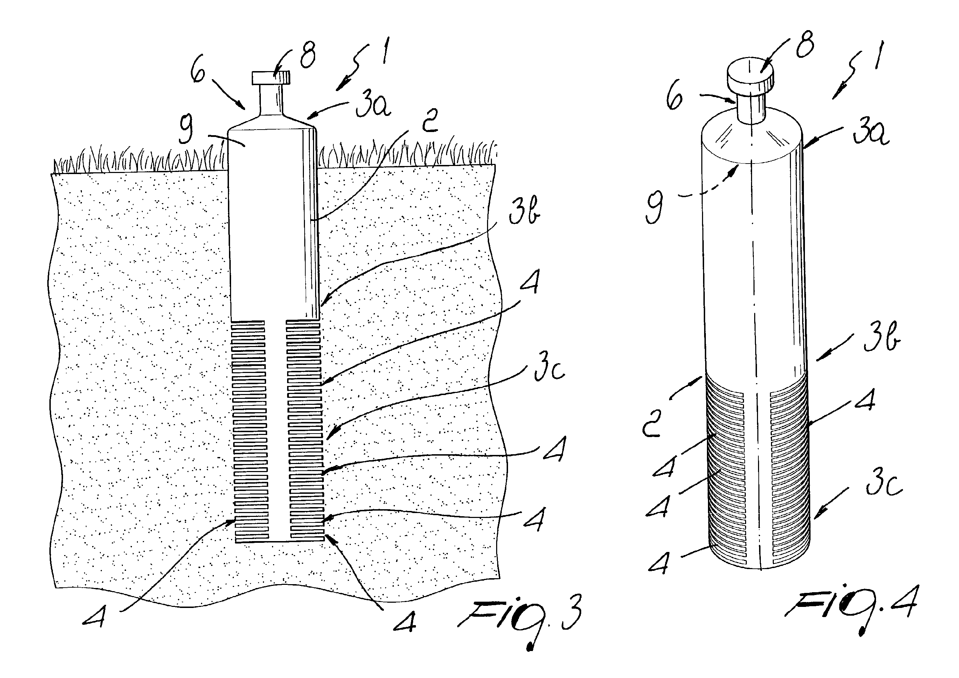

Figure 4 is an elevated perspective view of the device of the invention;
Figure 5 is a schematic view of an application of the device for the automatic control of a biogas aspirator.

With reference to the figures, the reference numeral 1 designates a gas collection device, particularly suitable for controlling facilities for the permanent storage of municipal solid waste.

The device 1 is constituted by a hollow body, designated by the reference numeral 2, which is preferably longitudinally elongated.

In the embodiment described herein, the hollow body 2 has a cylindrical shape with a vertically arranged axis.

In the hollow body 2 one can distinguish an upper part 3a, a central part 3b and a lower part 3c; at the lateral surface of the central part 3b and/or the lower part 3c there are multiple first openings, generally designated by the reference numeral 4, that are suitable to convey the biogas generated by the decomposition of the municipal solid waste inside the hollow body 2.

The first openings are advantageously slit-shaped, are arranged on parallel horizontal planes and are therefore arranged one above the other so as to obtain a device 1 that is provided with slits at the lower part 3c and optionally also at the central part 3b.

In this particular embodiment there are two approximately semicircular slits for each one of the horizontal planes.

The upper part of the hollow body 2 has a second opening, designated by the reference numeral 5, in an upward region at a bottleneck-like narrower region 6 of said hollow body 2 that begins further down.

The second opening 5 can be advantageously closed by means of a membrane, designated by the reference numeral 7, above which it is possible to arrange a protective plug 8, for example of the screw-on type.

In this manner, inside the upper part 3a there is a cavity, designated by the reference numeral 9, that is closed in an upward region and laterally and is suitable to contain the biogas that filters from outside through the first openings 4, rising toward the bottleneck 6 due to its lower relative density with respect to air.

It is also possible to provide a third opening in the bottom of the cylindrical element, in the opposite position with respect to the bottleneck 6; the presence of the third opening, despite leading to a reduction in the rigidity of the entire structure, facilitates the flow of biogas in the cavity 9.

Operation is therefore as follows: with reference to Figure 3, the biogas collection device 1 is arranged in an appropriate position inside or outside the perimeter of the landfill.

The device must be inserted in a vertical position in the soil or in the mass of municipal solid waste, so that upper part 3a protrudes at least partially from the ground.

Over time, the amount of biogas that migrates from the surrounding soil or municipal solid waste and accumulates within the cavity 9 through the openings 4 increases.

It is possible to periodically analyze the content of the collection device 1; one can use, for this purpose, a portable gas sampler that is capable of checking for the presence of methane or carbon dioxide arising from anaerobic fermentations.

The probe of the sampler is placed in contact with the gas contained in the cavity 9 by removing the plug 8 and piercing the membrane 7 with the probe itself.

Once the measurement has been completed, the device 1 is vented, emptying the cavity 9 of the accumulated biogas and thus eliminating any chemical memory.

A new membrane 7 is then placed so as to restore the initial conditions.

The longer the time elapsed between installation of the collection device and the measurement of the content with the probe, the higher the biogas content and the lower its homogeneity.

It is possible to use multiple collection devices 1 arranged in the most convenient manner with respect to each other, so as to form for example a grid or one or more concentric circular rings, so as to acquire a set of information that is as broad and complete as possible.

It has thus been found that the invention has achieved the intended aim and objects, a biogas collection device having been provided that allows to perform effective control of the flows of the biogas generated by the decomposition of municipal solid waste, allowing to reduce the danger inherent in the uncontrolled migration of biogas.

The device can be installed easily and quickly both within the perimeter of the landfill and outside it, optionally allowing control and optimization of the operation of the landfill.

The invention is of course susceptible of numerous modifications and variations, all of which are within the scope of the same inventive concept.

Thus, for example, in Figure 5 the reference numeral 101 designates a collection device used for the automatic detection of the presence of metabolites of the anaerobic fermentation of organic fractions.

The collection device 101 is composed of a hollow body 102 that can be closed at the top by means of a probe, designated by the reference numeral 110, that is sensitive to the gas to be monitored.

The probe 110 can be used merely as a collection and signaling structure or can be able to interface, by way of an appropriate transmitter, with one or more systems for the control and management of the facility.

The probe can in fact communicate with a data acquisition system or with an alarm indicator or with processes for regulating functions such as for example the negative pressure applied to the waste deposited in the landfill.

Figure 5 in fact also shows the biogas aspiration device and the burner for burning the biogas, designated by the reference numerals 111 and 112 respectively.

The materials used and the dimensions that constitute the individual components of the invention may of course be more pertinent according to the specific requirements.

The disclosures in Italian Patent Application No. TV2000A000120 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A gas collection device, particularly for controlling facilities for the permanent storage of municipal solid waste, constituted by a longitudinally elongated hollow body **characterized in that** it has, at its lower and/or central part, first openings for conveying biogas, the upper part of said hollow body being closed and accessible for measurements.

2. The device according to claim 1, **characterized in that** said hollow body has a cylindrical shape with a vertically arranged axis.

3. The device according to claim 1, **characterized in that** said hollow body has a prism-like shape with a vertically arranged axis.

4. The device according to claim 1, **characterized in that** said hollow body is approximately frustum-shaped with a vertically arranged axis.

5. The device according to one or more of the preceding claims, **characterized in that** said upper part of said hollow body has a second opening provided in an upward region, at a bottleneck-like narrower portion of said hollow body that begins further downward.

6. The device according to claims 1 and 5, **characterized in that** said second opening can be closed by means of a membrane above which a protective plug is arranged.

7. The device according to claims 1 and 6, **characterized in that** inside said upper part there is a cavity that is closed in an upward region and laterally and is suitable to contain the biogas that filters from outside through said first openings.

8. The device according to claims 1 and 7, **characterized in that** said first openings are constituted by a plurality of slits formed at the lateral surface of said central and/or lower parts, said slits being arranged on horizontal planes that are mutually particularly and are arranged one above the other so as to obtain said device provided with slits.

9. The device according to claims 1 and 8, **characterized in that** it has two of said slits, shaped approximately in a semicircular fashion, for each one of said horizontal planes.

10. The device according to one or more of the preceding claims, **characterized in that** it has a third opening provided in the bottom of said cylindrical elements, in the opposite position with respect to said bottleneck.

11. The device according to one or more of the preceding claims, **characterized in that** said second opening can be closed by way of a probe that is sensitive to the biogas to be monitored.

12. The device according to claims 1 and 11, **characterized in that** said probe is interfaced, by virtue of an appropriate transmitter, with one or more control and management systems of the facility.

13. The device according to claims 1 and 12, **characterized in that** said probe is interfaced with a biogas aspiration device.

14. The device according to claims 1 and 12, **characterized in that** said probe is interfaced with a burner designed to burn said biogas.
